Europäisches Patentamt

European Patent Office

Office européen des brevets

(19)

(11) **EP 0 945 975 A1**

(12) **DEMANDE DE BREVET EUROPEEN**

(43) Date de publication:
**29.09.1999 Bulletin 1999/39**

(51) Int Cl.$^6$: **H02P 6/22**, H02P 8/06,
H02P 6/18

(21) Numéro de dépôt: **99810104.2**

(22) Date de dépôt: **08.02.1999**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **27.03.1998 CH 73498**

(71) Demandeur: **SAIA-Burgess Electronics AG
CH-3280 Murten (CH)**

(72) Inventeur: **Lahlou, Moncef
1700 Fribourg (CH)**

(74) Mandataire:
**AMMANN INGENIEURS-CONSEILS EN
PROPRIETE INTELLECTUELLE SA BERNE
Schwarztorstrasse 31
3001 Bern (CH)**

(54) **Moteur pas à pas ou moteur à courant continu sans balais**

(57) Le moteur comprend deux paires de bobines de phase (1, 1') et (2, 2'), chaque paire de bobines permettant l'excitation magnétique en sens inverse d'une partie d'un stator associé (3, 4). Les deux parties de stator agissent sur un rotor à aimantation permanente (5). Les bobines de phase (1, 1', 2, 2') sont alimentées par des impulsions unipolaires à l'aide d'un seul interrupteur ($T_1$ à $T_4$) branchés en série avec la bobine de phase associée. Une résistance de mesure ($R_{sens}$) permet la mesure des courants de phase pour détecter la position du rotor à l'arrêt du moteur. Les phases (1, 1', 2, 2') sont successivement excités par une courte impulsion de mesure, et les courants traversant les bobines sont détectés, mémorisés et comparés pour en déterminer la position du rotor.

**Fig. 1**

EP 0 945 975 A1

**Fig. 2**

━━▉▉━━━ resistance de mesure du courant

━◤◣◥━ inductance et resistance de phase

## Description

La présente invention concerne un moteur pas à pas ou un moteur à courant continu sans balais (Brushless DC) selon le préambule de la revendication 1.

Des moteurs de ce dernier type sont décrits par exemple dans les brevets US-4,876,491 et US-5,117,165. Le circuit électronique associé à ces moteurs connus comprend des transistors de puissance configurés en pont permettant ainsi d'alimenter les bobines de phase du moteur par des impulsions d'entraînement et des impulsions de mesure ne pouvant pas modifier la position du rotor, les impulsions de mesure permettant ainsi de déterminer la position du rotor à l'arrêt avec une précision de $\frac{\pi}{m}$ (électrique) avec m le nombre de phases du moteur. Par conséquent, les circuits connus nécessitent au moins deux transistors de puissance par phase du moteur, et un circuit de commande d'une complexité correspondante.

Il est le but de la présente invention de simplifier la commande du moteur sans perte de qualité de l'information concernant la position du rotor du moteur à l'arrêt et permettant ainsi d'obtenir assez d'information afin de démarrer le rotor avec certitude dans la direction voulue. Ce but est atteint en ce que ledit moteur et ladite électronique sont à alimentation unipolaire, le courant de chaque phase du moteur étant commandé par un seul interrupteur. Cela veut dire que les courants dans les phases ne changent pas de polarité, et la précision de la mesure est de $\frac{2\pi}{m}$ (électrique). Cette solution est applicable indifféremment au moteur pas à pas et au moteur à courant continu sans balais car dans les deux cas, en effet, le moteur comporte un aimant permanent au rotor et est commuté électroniquement à travers les phases unipolaires du stator.

L'invention sera maintenant expliquée à l'aide d'un exemple d'exécution représenté dans les dessins dont:

la figure 1        représente une coupe schématique du moteur,

la figure 2        représente schématiquement l'amplificateur de puissance unipolaire avec la résistance de mesure du courant,

la figure 3        représente les flux statoriques, rotoriques et mutuels en fonction de l'angle électrique ainsi que les signes des différences de courant, les flux étant représentés en échelle relative per unit [p.u.],

la figure 4        représente l'allure des courants dans le moteur pendant les impulsions de mesure, et

la figure 5        représente un schéma-bloc de la procédure de détection de la position du rotor à l'arrêt et le démarrage du moteur.

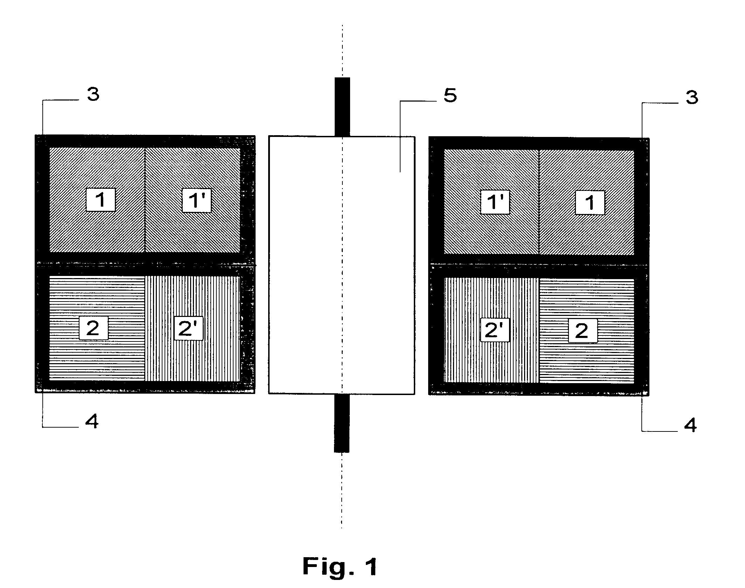

Le moteur pas à pas à griffes dont la figure 1 représente une section schématique comporte un stator en deux parties avec des paires de bobines 1, 1' et 2, 2'. Chaque paire de bobines se trouve dans une partie 3 resp. 4 du stator qui agissent sur un rotor 5 commun. Le rotor 5 comporte une aimantation permanente en soi connue. Les paires de bobines 1, 1' et 2, 2' sont couplées quasi parfaitement par leur circuit de fer statorique, et ces bobines séparées pourraient aussi être remplacées par une bobine bifilaire. Cependant, de toute façon, les deux bobines 1 et 1' ou 2 et 2' sont isolées électriquement l'une de l'autre et elles sont enroulées de sorte que les excitations magnétiques correspondantes sont inverses pour les impulsions unipolaires appliquées (aux bobines 1 resp. 1' ou 2, resp. 2').

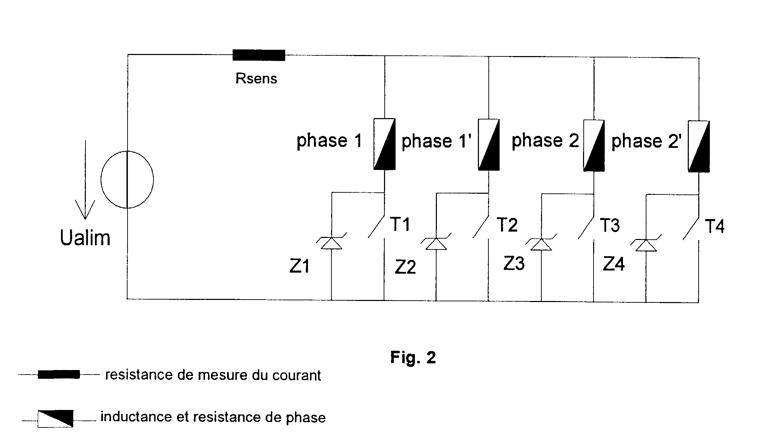

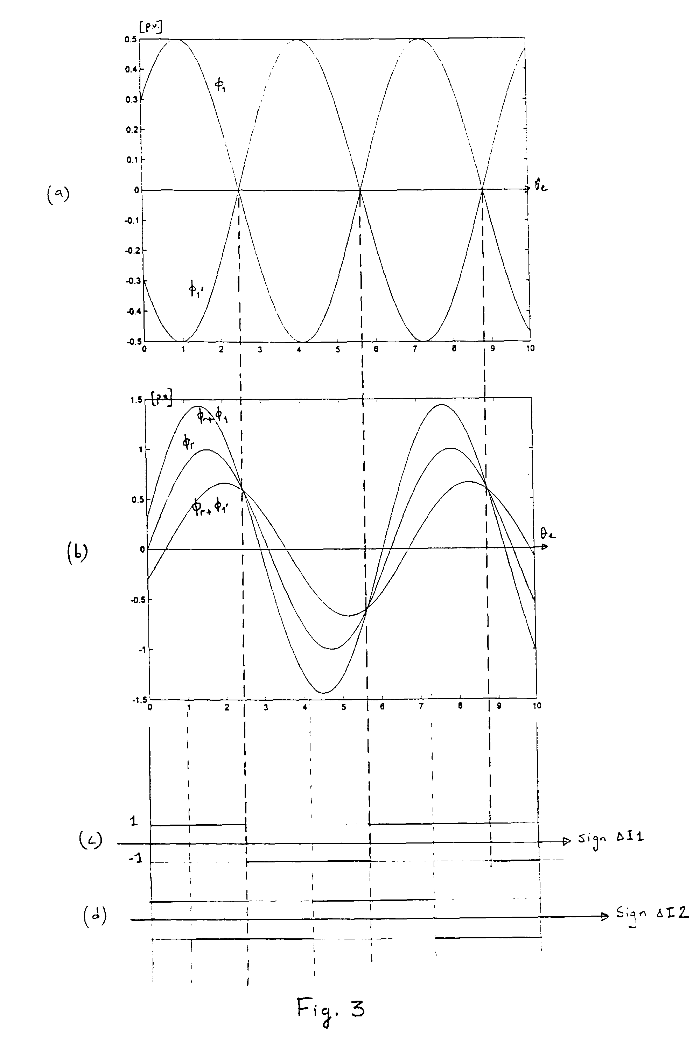

Le circuit de puissance utilisé est représenté à la figure 2. Il comporte une résistance $R_{sens}$ pour la mesure du courant de phase (conversion courant-tension), un commutateur et une diode Zener par phase. Pour faciliter la compréhension de la méthode utilisée, on représente à la figure 3 les flux magnétiques établis dans l'entrefer en supposant que ces derniers soient d'allure sinusoïdale. La figure 3 représente les flux $\phi_1$ et $\phi'_1$ générés par les deux phases 1 et 1' en fonction de la position du rotor $\theta_e$, exprimée en angle électrique. Ces deux flux sont les réponses à des impulsions de tension de même polarité, et de durée $\Delta T$ identique, appliquées aux phases 1 et 1'. Ainsi, l'orientation des flux $\phi_1$ et $\phi'_1$ ne dépend que du bobinage. Ces impulsions de mesure sont plus courtes que les impulsions d'entraînement et ne causent aucun déplacement du rotor.

La position du rotor est telle que $\phi_1$ est avancé d'environ $+\frac{\pi}{5}$ par rapport au flux magnétique rotorique $\phi_r$. Ce dernier est représenté à la figure 3 avec le flux mutuel à savoir la somme des flux statoriques et rotoriques ($\phi_r+\phi_1$, resp. $\phi_r+\phi'_1$). Ainsi, on met en évidence le fait que les niveaux de saturation sont différents pour les phases 1 et 1', ce qui implique que le courant de crête $\hat{I}_1$ (à savoir le courant à la fin de l'impulsion de tension) soit supérieur à $\hat{I}'_1$, à savoir $\Delta I_1 = \hat{I}_1 - \hat{I}'_1 > 0$. Pour préciser, il faut noter que le sens du champ magnétique dans le stator du au courant de phase dépend du sens d'enroulement des bobines.

Par la suite, il est aisé de déterminer le signe de $\Delta I_1$ pour un angle d'avance de $\phi_1$ par rapport à $\phi_r$ - compris entre 0 et $2\pi$. On obtient ainsi, en fonction de l'angle électrique, un signal carré (et de même période de la période électrique) représenté à la figure 3. De plus, les flux statoriques $\phi_2$ et $\phi'_2$ étant déphasées de $\frac{\pi}{2}$ électrique par rapport à $\phi_1$ et $\phi'_1$, le signe de $\Delta I_2$ obtenu (voir courbe 2) est déphasé de $\frac{\pi}{2}$ électrique par rapport à $\Delta I_1$ - pour la même position rotorique -. Par conséquent, le signe du couple (signe ($\Delta I_1$), signe ($\Delta I_2$)), dont la valeur est donnée à la table 1 en fonction de l'angle de déphasage entre $\phi_r$ et $\phi_1$, permet de déterminer la position avec une précision de $\frac{\pi}{2}$ .

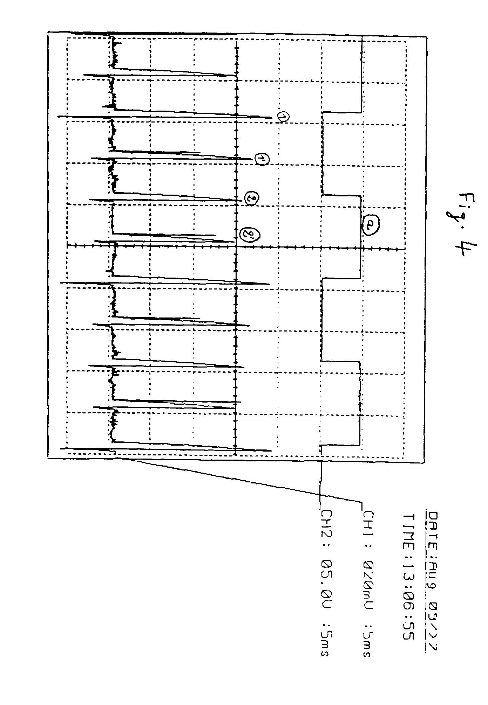

Le relevé d'oscilloscope de la figure 4 illustre les impulsions de courant obtenues dans les phases 1, 1', 2, 2'. Les différences entre les valeurs de crête permettent de montrer aisément que les signes de $\Delta I_1$ et de $\Delta I_2$ sont positifs, ce qui correspond à un angle d'avance de $\phi_1$ par rapport à $\phi_r$ compris entre $\frac{3\pi}{2}$ et $2\pi$.

La détermination de la position du rotor permet en outre de prévoir le sens de rotation lors de la première commutation de phase à rotor immobile. Ceci permet, pour la stratégie de commande adoptée (One Phase On ou Two Phase On) de déterminer la première commutation d'une ou deux phases dans le but de démarrer le rotor directement dans le sens choisi. A la table 1 sont représentées les premières commandes en Two Phase On correspondant aux sens horaire (conventionnel) et anti-horaire.

Table 1

| Degré électrique (avance de $\phi_1$ par rapport à ($\phi_r$) | Signe de $\Delta I_1$, $\Delta I_2$ | | Combinaison de courant (sens horaire) | | | | Combinaison de courant (sens anti-horaire) | | | |
|---|---|---|---|---|---|---|---|---|---|---|
| | | | $I_1$ | $I'_1$ | $I_2$ | $I_2'$ | $I_1$ | $I'_1$ | $I_2$ | $I'_2$ |
| $0..\frac{\pi}{2}$ | + | - | 1 | - | 1 | - | - | 1 | - | 1 |
| $\frac{\pi}{2}..\pi$ | - | - | 1 | - | - | 1 | - | 1 | 1 | - |
| $\pi..\frac{3\pi}{2}$ | - | + | 1 | - | - | 1 | - | 1 | 1 | - |
| $\frac{3\pi}{2}..2\pi$ | + | + | - | 1 | 1 | - | 1 | - | - | 1 |
| - signifie que la phase en question n'est pas alimentée et 1 signifie le contraire | | | | | | | | | | |

Supposons par exemple que le rotor soit positionné de sorte que le déphasage entre le rotor et le stator soit compris entre 0 de $\frac{\pi}{2}$. La première commande à appliquer pour que le moteur tourne dans le sens horaire de manière parfaite (c'est-à-dire sans aucun déplacement dans le sens contraire) est d'appliquer la commande ($I_1$ = 1; $I_2$ = 1).

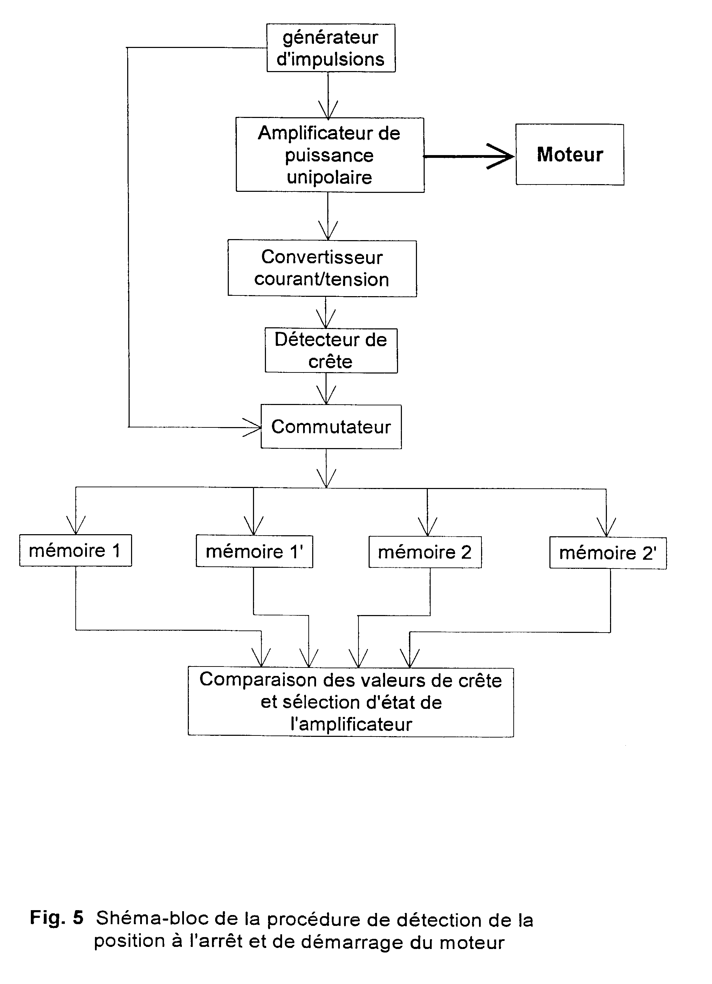

Un schéma-bloc de la procédure de détection de la position à l'arrêt et de démarrage du moteur est donné à la figure 5. Cette procédure ainsi que la description qui suit n'est pas voulue exhaustive mais exemplaire.

Selon cette procédure, un générateur d'impulsion permet de contrôler l'amplificateur de puissance unipolaire utilisé pour alimenter les phases du moteur. Ainsi, le générateur d'impulsion envoie successivement sur les commutateurs (généralement des transistors) des impulsions de mesure de durée déterminée $\Delta T$ permettant d'alimenter une phase pendant une durée $\Delta T$ contrôlée. Le convertisseur de courant/tension (en général la résistance Rsens) permet d'obtenir une tension qui est l'image du courant dans la phase. La valeur de crête de cette tension est ensuite détectée et mise en mémoire. Cette procédure est répétée pour toutes les phases du moteur.

Ainsi, pour un moteur unipolaire quadriphasé, on a besoin de quatre places-mémoire pour les valeurs de crête des phases 1, 1', 2 et 2'. Par la suite, les valeurs de crête sont comparées par couple de phase (à savoir (1, 1'), (2, 2') pour le moteur quadripolaire) pour obtenir les signes de $\Delta I_1$ et $\Delta I_2$. Ces signes permettent de sélectionner les phases à alimenter en fonction de la direction de démarrage désirée selon la table 1.

Dans le procédé ci-dessus, la position à l'arrêt est déterminée sur la base de la comparaison des niveaux de crête des impulsions de courant dans les phases. Or, d'autres techniques sont possibles pour la comparaison des impulsions de courant, à savoir:

- calcul de l'intégral du courant pendant la durée $\Delta T$;
- pour chaque phase, mesurer la durée $\Delta T$ qui s'écoule entre l'enclenchement du courant et l'instant où le courant atteint une valeur limite prédéterminée. Dans l'exemple du moteur pas à pas à griffes précité, on obtient pour les phases 1, 1', 2 et 2' quatre durées $\Delta T_1$, $\Delta T'_1$, $\Delta T_2$ et $\Delta T'_2$. Par la suite, la position à l'arrêt est déterminée exactement selon la table 1 mais en y permutant les phases 1, 1' d'une part et 2, 2' d'autre part.

Le procédé de la figure 5 est indépendant de la méthode de commutation adoptée, à savoir en mode boucle ouverte ou mode pas à pas ou en autocommutation avec ou sans capteur.

Enfin, le temps d'enclenchement $\Delta T$ est en général de l'ordre de grandeur de la constante de temps électrique nominale du moteur (L/R), mais peut être modifié. En outre, les phases du moteur peuvent être alimentés dans un ordre quelconque.

**Revendications**

1. Moteur pas à pas ou moteur à courant continu sans balais commandé par un circuit électronique susceptible d'alimenter les phases du moteur par des impulsions d'entraînement et par des impulsions de tension de mesure de plus courte durée que les impulsions d'entraînement, ledit circuit électronique comprenant des moyens d'analyse pour analyser l'allure des courants de phase pendant lesdits impulsions de mesure et d'en déduire la position du rotor du moteur à l'arrêt, caractérisé en ce que ledit moteur et ladite électronique sont à alimentation unipolaire, le courant de chaque phase (1, 1', 2, 2') du moteur étant commandé par un seul interrupteur ($T_1$ à $T_4$).

2. Moteur selon la revendication 1, caractérisé en ce que les bobines de phase (1, 1', 2, 2') se trouvent par paire dans un stator ou une partie de stator (3, 4) commun, les bobines par paire étant branchées de sorte que les impulsions unipolaires parcourant ces bobines entraînent des excitations magnétiques de sens inverse.

3. Moteur selon la revendication 2, caractérisé en ce que chaque paire de bobines (1, 1' resp. 2, 2') est réalisée par un enroulement bifilaire.

4. Moteur selon une des revendications 1 à 7, caractérisé en ce que lesdits moyens d'analyse comportent un circuit de comparaison susceptible de détecter la différence des valeurs de crête ou des intégrals du courant ou des temps de montée dans chaque paire de bobines (1 et 1', resp. 2 et 2') lors des impulsions de mesure.

5. Moteur à quatre phases selon une des revendications 1 à 4, caractérisé en ce que son stator est composé de deux parties (3, 4) dont chacune est munie de deux bobines de phase (1, 1' resp. 2, 2').

6. Moteur selon une des revendications 1 à 5, caractérisé en ce qu'une résistance est branchée en série avec ledit interrompteur et ladite bobine dans le circuit de chaque phase, ou une résistance (R) est branchée dans le circuit d'alimentation commun de toutes les bobines de phase (1, 1', 2, 2'), lesdits moyens d'analyse étant susceptible de détecter et de comparer les chutes de tension dans ladite ou lesdites résistances.

7. Moteur selon une des revendications 1 à 6, caractérisé en ce que lesdits moyens d'analyse comportent des mémoires (mémoire 1 à mémoire 2') pour mémoriser lesdits valeurs de crête ou intégrales ou durées de montée, et un circuit de comparaison de ces grandeurs.

**Fig. 1**

**Fig. 2**

resistance de mesure du courant

inductance et resistance de phase

Fig. 3

EP 0 945 975 A1

9

CH2: 05.0U :5ms

CH1: 020mU :5ms

TIME:13:06:55
DATE:Aug 09/??

Fig. 4

**Fig. 5** Shéma-bloc de la procédure de détection de la position à l'arrêt et de démarrage du moteur

**Office européen des brevets**

## RAPPORT DE RECHERCHE EUROPEENNE

Numéro de la demande

EP 99 81 0104

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | US 5 028 852 A (DUNFIELD JOHN C) 2 juillet 1991 | 1 | H02P6/22 H02P8/06 H02P6/18 |
| A | * abrégé; figure 5 * | 6,7 | |
| Y | EP 0 720 283 A (HONEYWELL INC) 3 juillet 1996 * colonne 8, ligne 15 - ligne 34; figure 14 * * colonne 17, ligne 1 - ligne 12 * | 1 | |
| A | CARDOLETTI L ET AL: "INDIRECT POSITION DETECTION AT STANDSTILL FOR BRUSHLESS DC AND STEP MOTORS" PROCEEDINGS OF THE EUROPEAN CONFERENCE ON POWER ELECTRONICS AND APPLICATIONS. (EPE), AACHEN, 9 - 12 OCTOBER, 1989, vol. 3, no. CONF. 3, 9 octobre 1989, pages 1219-1222, XP000143540 LEONHARD W;HOLTZ J; SKUDELNY H C * figure 2 * | 1-7 | |
| A | EP 0 282 764 A (BOSCH GMBH ROBERT) 21 septembre 1988 * abrégé; figure 1 * | 1 | DOMAINES TECHNIQUES RECHERCHES (Int.Cl.6) H02P |
| A | PATENT ABSTRACTS OF JAPAN vol. 018, no. 003 (E-1485), 6 janvier 1994 & JP 05 244794 A (NIPPON DENSAN CORP), 21 septembre 1993 * abrégé * | 1 | |
| A | EP 0 186 850 A (SIEMENS AG) 9 juillet 1986 * abrégé; figure 1 * | 1 | |
| A | EP 0 739 080 A (MARTIN MARIETTA CORP) 23 octobre 1996 * abrégé; figure 3A * | 1,3 | |

Le présent rapport a été établi pour toutes les revendications

| Lieu de la recherche | Date d'achèvement de la recherche | Examinateur |
|---|---|---|
| LA HAYE | 29 juin 1999 | Beyer, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**           EP 99 81 0104

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-06-1999

| Document brevet cité au rapport de recherche | | Date de publication | Membre(s) de la famille de brevet(s) | | Date de publication |
|---|---|---|---|---|---|
| US 5028852 | A | 02-07-1991 | DE | 69111916 D | 14-09-1995 |
|  |  |  | DE | 69111916 T | 07-12-1995 |
|  |  |  | EP | 0462729 A | 27-12-1991 |
|  |  |  | JP | 2635237 B | 30-07-1997 |
|  |  |  | JP | 6113585 A | 22-04-1994 |
| EP 0720283 | A | 03-07-1996 | US | 5196775 A | 23-03-1993 |
|  |  |  | CA | 2060625 A | 21-08-1992 |
|  |  |  | DE | 69220589 D | 07-08-1997 |
|  |  |  | DE | 69220589 T | 04-12-1997 |
|  |  |  | DE | 69227929 D | 28-01-1999 |
|  |  |  | EP | 0500295 A | 26-08-1992 |
|  |  |  | JP | 6189580 A | 08-07-1994 |
| EP 0282764 | A | 21-09-1988 | DE | 3709168 A | 29-09-1988 |
|  |  |  | DE | 3877790 A | 11-03-1993 |
|  |  |  | US | 4833387 A | 23-05-1989 |
|  |  |  | ZA | 8801349 A | 29-08-1988 |
| EP 0186850 | A | 09-07-1986 | AT | 48351 T | 15-12-1989 |
|  |  |  | JP | 61150696 A | 09-07-1986 |
|  |  |  | US | 4675583 A | 23-06-1987 |
| EP 0739080 | A | 23-10-1996 | US | 5668450 A | 16-09-1997 |
|  |  |  | AU | 5052896 A | 31-10-1996 |
|  |  |  | JP | 8289583 A | 01-11-1996 |

EPO FORM P0460

Pour tout renseignement concernant cette annexe : voir Journal Officiel de l'Office européen des brevets, No.12/82